# EUROPÄISCHE PATENTANMELDUNG

(11) **EP 2 693 651 A1**
(43) Veröffentlichungstag der Anmeldung: **05.02.2014**
(21) Anmeldenummer: 13177726.0
(22) Anmeldetag: 24.07.2013
(51) Int. Cl.: H04B 5/00, H04L 12/24, H04L 12/28

(54) **Busfähiges Gerät der Gebäudesystemtechnik und/oder Türkommunikation**

(30) Priorität: 01.08.2012 DE 202012007433 U
(71) Anmelder: ABB AG, 68309 Mannheim (DE)
(72) Erfinder: Kleine-Cosack, Christian, 44229 Dortmund (DE); Platte, Jörg, 44149 Dortmund (DE); Linde, Holger, 44137 Dortmund (DE); Wegner, Tobias, 44147 Dortmund (DE)

(57) **Zusammenfassung**

Es wird ein busfähiges Gerät (1) der Gebäudesystemtechnik und/oder Türkommunikation mit einer Elektronik (2) vorgeschlagen, an welche ein Konfigurationsspeicher (5), ein Energiespeicher (6) und eine Drahtloskommunikationsschnittstelle (3) ange-schlossen sind, wobei im Rahmen einer Erstinbetriebnahme des busfähigen Geräts (1) über eine Drahtloskommunikationsstrecke (4) zwischen der Drahtloskommunika-tionsschnittstelle (3) des busfähigen Geräts (1) und einer Drahtloskommunikations-schnittstelle (9) eines Inbetriebnahmegerätes (8) der Konfigurationsspeicher (5) des zu programmierenden busfähigen Geräts (1) beschreibbar ist und optional der Energiespeicher (6) des busfähiges Geräts (1) gleichzeitig über die Drahtlos-kommunikationsstrecke (4) mit elektrischer Energie versorgbar ist.

## Beschreibung

Die Erfindung betrifft ein busfähiges Gerät der Gebäudesystemtechnik (GST) respektive Gebäudeinstallationstechnik und/oder Türkommunikation, wie Schalter, Raumtemperaturregler, Bewegungs- und Präsenzmelder, Zeitschaltuhren, Rauchmelder, Dämmerungsschalter, Dimmer, Türstation oder Wohnungsstation eines Türkommunikationssystems usw.

Busfähige Geräte respektive Kommunikationsteilnehmer der Gebäudesystemtechnik und/oder Türkommunikation haben gemein, dass in der Regel eine Erstinbetriebnahme erfolgen muss, bevor eine Buskommunikation möglich ist. Bei dieser Erstinbetriebnahme wird einerseits die Kommunikationsfähigkeit des busfähigen Gerätes hergestellt, indem beispielsweise Adressierungsinformationen, wie beispielsweise physikalische Adressen oder IP-Adresse, oder Verschlüsselungsinformationen, beispielsweise bei WLAN, übertragen werden. Darüber hinaus können in der Regel verschiedene Funktionen konfiguriert werden, wie beispielsweise ein Wechsel zwischen Schalten und Tasten, und es kann eine Verknüpfung zwischen einem Sensor, wie beispielsweise einem Schalter, und einem Aktor, wie beispielsweise einem Dimmer, hergestellt werden.

Eine derartige Erstinbetriebnahme des busfähigen Gerätes kann im Einbauzustand erfolgen, was jedoch einen Vorort-Besuch eines Inbetriebnahme-Technikers bei jedem Kommunikationsteilnehmer erfordert. Dies kann sich entweder aufgrund der Einbausituation oder aufgrund der Größe der Installation, wie beispielsweise in Bürooder öffentlichen Gebäuden, aufwendig und schwierig gestalten. Deswegen werden in der Praxis die Kommunikationsteilnehmer großer Installationen teilweise bereits vor dem Einbau programmiert und konfiguriert. Dabei ergeben sich die folgenden Probleme:
1. Aufgrund des unterschiedlichen Funktionsumfangs der busfähigen Geräte muss zur Erstellung der Konfiguration der genaue Gerätetyp des busfähigen Geräts bekannt sein. In der Regel muss dazu die Artikelnummer/Bestellnummer des busfähigen Geräts in die Konfigurationssoftware eingegeben werden.
2. Um den Einbau am richtigen Ort sicherzustellen muss das busfähige Gerät entsprechend gekennzeichnet werden.
3. Das busfähige Gerät muss mit Spannung versorgt und mit einer Programmiereinrichtung verbunden werden. Eventuell muss ein Programmiertaster gedrückt werden.
4. Das busfähige Gerät muss aus der Verpackung genommen werden. Ist die Kennzeichnung auf der Verpackung aufgebracht, muss sichergestellt werden, dass das busfähige Gerät anschließend wieder in dieselbe Verpackung eingepackt wird. Wird die Kennzeichnung im Rahmen der Erstinbetriebnahme auf dem busfähigen Gerät selbst aufgebracht, ist sie nach dem Wiederverpacken nicht mehr sichtbar, was nachteilig ist.
5. Für den Transport zum Einbauort muss das busfähige Gerät mit seiner empfindlichen Elektronik in der Regel erneut verpackt werden.

Der Erfindung liegt die Aufgabe zugrunde, ein die Erstinbetriebnahme erleichterndes busfähiges Gerät der Gebäudesystemtechnik und/oder Türkommunikation anzugeben.

Diese Aufgabe wird erfindungsgemäß gelöst durch ein busfähiges Gerät der Gebäudesystemtechnik und/oder Türkommunikation mit einer Elektronik, an welche ein Konfigurationsspeicher, ein Energiespeicher und eine Drahtloskommunikationsschnittstelle angeschlossen sind, wobei im Rahmen einer Erstinbetriebnahme des busfähigen Geräts über eine Drahtloskommunikationsstrecke zwischen der Drahtloskommunikationsschnittstelle des busfähigen Geräts und einer Drahtloskommunikationsschnittstelle eines Inbetriebnahmegerätes der Konfigurationsspeicher des zu programmierenden busfähigen Geräts beschreibbar ist.

Die mit der Erfindung erzielbaren Vorteile bestehen insbesondere darin, dass es aufgrund des Einsatzes der vorgeschlagenen Drahtloskommunikationstechnik nicht mehr notwendig ist, das busfähige Gerät bei der Erstinbetriebnahme aus seiner Verpackung zu entnehmen und anzuschließen, was Zeit spart und der Gefahr begegnet, busfähige Geräte während der Erstinbetriebnahme zu vertauschen. Eine Auswahl aus einer vorgelegten respektive erzeugten Liste oder eine Vorkonfiguration unter Definition von Passwörtern / Netzwerkschlüsseln sind nicht erforderlich.

Vorzugsweise ist der Energiespeicher des busfähigen Geräts gleichzeitig über die Drahtloskommunikationsstrecke mit elektrischer Energie versorgbar.

In weiterer Ausgestaltung ist über die Drahtloskommunikationsstrecke der Gerätetyp des zu programmierenden busfähigen Geräts bestimmbar.

Vorzugsweise ist als Drahtloskommunikationstechnik NFC (Near Field Communication) eingesetzt.

Gemäß einer alternativen Ausführungsform ist ein mobiles Endgerätes als Inbetriebnahmegerät eingesetzt.

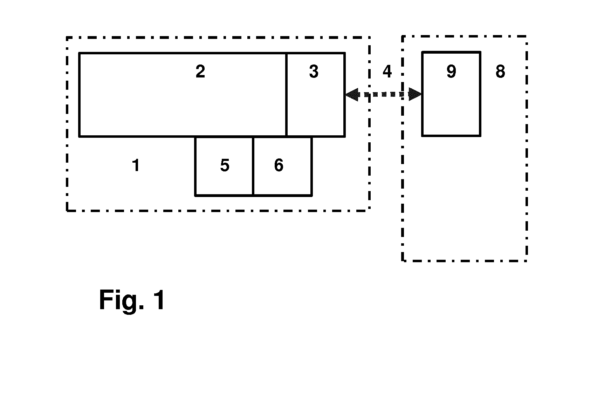

Die Erfindung wird nachstehend an Hand des in der Zeichnung dargestellten Ausführungsbeispiels erläutert. In Fig. 1 ist ein Prinzipschaltbild zur Erstinbetriebnahme eines busfähigen Gerätes dargestellt. Es ist ein busfähiges Gerät 1 zu erkennen, welches unter anderem eine Elektronik 2, eine Drahtloskommunikationsschnittstelle 3, einen Konfigurationsspeicher 5 und einen Energiespeicher 6 aufweist. Weitere im betroffenen Zusammenhang nicht weiter interessierende Baukomponenten des busfähigen Gerätes 1 sind nicht gezeigt. Das busfähige Gerät 1 kann beispielsweise als Schalter, als Raumtemperaturregler, als Bewegungs- und Präsenzmelder, als Zeitschaltuhr, als Rauchmelder, als Dämmerungsschalter, als Dimmer, als Türstation oder Wohnungsstation eines Türkommunikationssystems usw. ausgebildet sein.

Die Erstinbetriebnahme des busfähigen Geräts 1 erfolgt unter Einsatz eines Inbetriebnahmegerätes 8, welches eine Drahtloskommunikationsschnittstelle 9 aufweist. Die Erstinbetriebnahme des busfähigen Geräts 1 erfolgt über eine Drahtloskommunikationsstrecke 4 zwischen den beiden Drahtloskommunikationsschnittstellen 3 und 9.

Die vorgeschlagene Erfindung stellt einen zum eingangs geschilderten Stand der Technik alternativen Weg der Erstinbetriebnahme vor. Dabei wird das busfähige Gerät 1 um die drahtlose Kommunikationsschnittstelle respektive Drahtloskommunikationsschnittstelle 3, beispielsweise Kurzstreckenfunk, NFC (Near Field Communication), erweitert, die das zu programmierende busfähige Gerät 1 gleichzeitig über die Drahtloskommunikationsstrecke mit elektrischer Energie versorgen kann, den Gerätetyp bestimmen kann und den Konfigurationsspeicher 5 des busfähiges Geräts 1 beschreiben kann. NFC ist dabei ein Übertragungsstandard zum kontaktlosen Austausch von Daten über kurze Strecken von bis zu 4 cm.

Die Erstellung der Konfiguration für die Erstinbetriebnahme durch das Inbetriebnahmegerät 8, beispielsweise einen PC mit einer Inbetriebnahmesoftware wie beispielsweise der ETS, wird vorzugsweise durch das kontaktlose Auslesen des Gerätetyps und das automatische Einfügen des erkannten busfähigen Gerätes unterstützt. Die Erstinbetriebnahme kann dann mit Hilfe des Inbetriebnahmegerätes 8 erfolgen, welches die erstellte Konfiguration per Drahtloskommunikationstechnik, wie Kurzstreckenfunk, kontaktlos in das busfähige Gerät 1 programmiert. Daher ist es nicht mehr notwendig, das busfähige Gerät 1 aus der Verpackung zu nehmen und anzuschließen, was Zeit bei der Erstinbetriebnahme spart und der Gefahr begegnet, busfähige Geräte während der Erstinbetriebnahme zu vertauschen.

Allgemein können die Programmierung der Kommunikationsteilnehmer und das Zuweisen der Gruppenadressen bei einem Bussystem mit einer speziellen, standardisierten Software, der Engineering-Tool-Software ETS erfolgen. Die ETS wird von der Dachorganisation KNX Association bereitgestellt und sichert die problemlose Zusammenarbeit von Komponenten verschiedener Hersteller.

Alternativ kann die Erstinbetriebnahme eines busfähigen Gerätes 1 mit Hilfe eines mobilen Endgerätes als Inbetriebnahmegerät 8 erfolgen, beispielsweise eines Smartphones mit drahtloser Kommunikationsschnittstelle respektive Drahtloskommunikationsschnittstelle 9, wie Kurzstreckenfunk, direkt am Einbauort vorgenommen werden. Dazu wird die Konfiguration nach der Erstellung auf das als Inbetriebnahmegerät 8 dienende mobile Endgerät übertragen und die busfähigen Geräte 1 der Gebäudesystemtechnik und/oder Türkommunikation können beim Einbau programmiert werden.

Im Vergleich zu einer Erstinbetriebnahme eines busfähigen Geräts 1 per WLAN oder anderen Funklösungen bietet der Einsatz der Drahtloskommunikationsschnittstelle 3 insbesondere folgende Vorteile:
- Das zu konfigurierende busfähige Gerät 1 wird unmittelbar durch die räumliche Nähe des Inbetriebnahmegerätes 8 ausgewählt. Das busfähige Gerät 1 muss nicht zunächst in einer Liste von gefundenen busfähigen Geräten beispielsweise durch Drücken einer Taste identifiziert und ausgewählt werden.
- Eine direkte Kommunikation zwischen busfähigem Gerät 1 und Inbetriebnahmegerät 8 ist ohne Vorkonfiguration von Passwörtern/Netzwerkschlüsseln möglich.
- Es ergibt sich eine erhöhte Sicherheit bei der Erstinbetriebnahme, da zu jedem Augenblick der unmittelbare physikalische Zugriff auf das busfähige Gerät 1 gewährleistet ist.

### Bezugszeichenliste

- 1: busfähiges Gerät
- 2: Elektronik
- 3: Drahtloskommunikationsschnittstelle
- 4: Drahtloskommunikationsstrecke
- 5: Konfigurationsspeicher
- 6: Energiespeicher
- 7: -
- 8: Inbetriebnahmegerät
- 9: Drahtloskommunikationsschnittstelle

## Patentansprüche

1. Busfähiges Gerät (1) der Gebäudesystemtechnik und/oder Türkommunikation mit einer Elektronik (2), an welche ein Konfigurationsspeicher (5), ein Energiespeicher (6) und eine Drahtloskommunikationsschnittstelle (3) angeschlossen sind, wobei im Rahmen einer Erstinbetriebnahme des busfähigen Geräts (1) über eine Drahtloskommunikationsstrecke (4) zwischen der Drahtloskommunikations-schnittstelle (3) des busfähigen Geräts (1) und einer Drahtloskommunikationsschnittstelle (9) eines Inbetriebnahmegerätes (8) der Konfigurationsspeicher (5) des zu programmierenden busfähigen Geräts (1) beschreibbar ist.

2. Busfähiges Gerät (1) nach Anspruch 1, **dadurch gekennzeichnet, dass** der Energiespeicher (6) des busfähigen Geräts (1) gleichzeitig über die Drahtloskommunikationsstrecke (4) mit elektrischer Energie versorgbar ist.

3. Busfähiges Gerät (1) nach Anspruch 1, **dadurch gekennzeichnet, dass** über die Drahtloskommunikationsstrecke (4) der Gerätetyp des zu programmierenden busfähigen Geräts (1) bestimmbar ist.

4. Busfähiges Gerät (1) nach Anspruch 1, **dadurch gekennzeichnet, dass** als Drahtloskommunikationstechnik NFC (Near Field Communication) eingesetzt ist.

5. Busfähiges Gerät (1) nach Anspruch 1, **dadurch gekennzeichnet, dass** als Inbetriebnahmegerät (8) ein mobiles Endgerätes eingesetzt ist.
